# EUROPEAN PATENT APPLICATION

(11) **EP 4 564 575 A2**
(43) Date of publication of application: **04.06.2025**
(21) Application number: 24215858.2
(22) Date of filing: 27.11.2024
(51) Int. Cl.: H01M 50/446, H01M 50/403, H01M 50/414, H01M 50/417, H01M 50/426, H01M 50/434, H01M 50/443, H01M 50/491, H01M 50/494, H01M 50/497, H01M 10/0525

(54) **SEPARATOR AND PREPARATION METHOD THEREOF, BATTERY, AND ELECTRIC DEVICE**

(30) Priority: 30.11.2023 CN 202311637518
(71) Applicant: BYD Company Limited, Shenzhen, Guangdong 518118 (CN)
(72) Inventor: JIN, Peipei, Shenzhen, 518118 (CN); XIAO, Ziwei, Shenzhen, 518118 (CN); LOU, Jingxue, Shenzhen, 518118 (CN); OU, Xiaoju, Shenzhen, 518118 (CN); HE, Kefeng, Shenzhen, 518118 (CN)
(74) Representative: Mathys & Squire

(57) **Abstract**

The present disclosure provides a separator, including the following components: a porous polymer substrate and lithium-rich material particles. The lithium-rich material particles are dispersed in the porous polymer substrate, and the lithium-rich material particles in the porous polymer substrate have a dispersion degree range ranging from 4 µm to 10 µm and a particle coverage rate ranging from 5% to 12%. In addition, the present disclosure further discloses a method for preparing the separator, a battery, and an electric device. The separator provided in the present disclosure has a lithium replenishment function, reducing capacity loss in battery formation. In addition, the separator has high tensile strength, improving wetting capability of an electrolyte for the separator, and inhibiting lithium dendrites and dark spots.

## Description

### FIELD

The present disclosure relates to the technical field of battery materials, and specifically, to a separator and a preparation method thereof, a battery, and an electric device.

### BACKGROUND

Polymer separators prepared by a tensile method have been widely used in the production of separators of lithium-ion batteries. A conventional polymer separator mainly serves as an ion transport channel. However, the conventional polymer separator has some performance deficiencies such as poor heat resistance and poor electrolyte wetting, which fails to help improve electrochemical performance of a battery. In recent years, in some studies, inorganic particles and polymers are blended and extruded to improve the performance of a separator. However, actually, the addition of inorganic particles has limited improvement on heat resistance of the polymer separator, and leads to a decrease in tensile strength of the polymer separator. In addition, the addition of inorganic particles affects wetting capability of the separator by an electrolyte, which affects ionic conductivity of the separator and increases internal resistance of a battery, leading to uneven deposition of lithium ions and the problem of dark spots. The battery consumes some of lithium salts during initial formation to form a solid state electrolyte (SEI) film, which reduces the concentration of the lithium salts in the electrolyte, leading to irreversible capacity loss and low initial coulombic efficiency of the battery.

### SUMMARY

In view of the problems of low initial coulombic efficiency, dark spots, and insufficient separator tensile strength of an existing battery, the present disclosure provides a separator and a preparation method thereof, a battery, and an electric device.

Technical solutions adopted in the present disclosure to resolve the foregoing technical problems are as follows:

In a first aspect, the present disclosure provides a separator, including the following components:
A porous polymer substrate and lithium-rich material particles, and
the lithium-rich material particles are dispersed in the porous polymer substrate, and the lithium-rich material particles in the porous polymer substrate have a dispersion degree range ranging from 4 µm to 10 µm and a particle coverage rate ranging from 5% to 12%.

Optionally, the lithium-rich material particles in the porous polymer substrate have the dispersion degree range ranging from 5 µm to 8.5 µm and the particle coverage rate ranging from 6% to 9%.

Optionally, based on a total weight of the separator being 100%, a mass content of the porous polymer substrate ranges from 93% to 99.5%, and a mass content of the lithium-rich material particles ranges from 0.5% to 7%.

Optionally, based on a total weight of the separator being 100%, a mass content of the porous polymer substrate ranges from 90% to 99%, and a mass content of the lithium-rich material particles ranges from 1% to 10%.

Optionally, a melting point of the porous polymer substrate ranges from 80°C to 180°C.

Optionally, the porous polymer substrate comprises one or more of high-density polyethylene, ultra-high-density polyethylene, low-density polyethylene, linear low-density polyethylene, high-density polypropylene, ultra-high-density polypropylene, polyimide, and polyvinylidene fluoride.

Optionally, the lithium-rich material particles comprise one or more of Li₅FeO₄, Li₂Ni₅O₄, Li₂MnO₃, LiCoO₄, Li₆MnO₄, and LiReO₆.

Optionally, a particle size (D50) of the lithium-rich material particles ranges from 0.5 µm to 5 µm.

Optionally, the separator meets at least one of the following conditions:
a tensile strength of the separator ranges from 150 MPa to 300 MPa;
a pore size of the separator ranges from 20 nm to 70 nm;
porosity of the separator ranges from 20% to 70%;
air permeability of the separator ranges from 50 s/100 cc to 500 s/100 cc;
an electrolyte diffusion radius of the separator ranges from 0.2 cm to 3 cm.
Optionally, a thickness of the separator ranges from 1 µm to 50 µm.

In a second aspect, the present disclosure provides a method for preparing the - separator, including the steps of:
The lithium-rich material particles are dispersed in paraffin oil to form a suspension;
the suspension is mixed with a polymer material to prepare a precursor of the separator; and
the paraffin oil is removed from the precursor of the separator to obtain the separator.

Optionally, a mass ratio of the polymer material to the paraffin oil is (25-35):(65-75).

Optionally, the paraffin oil is removed through organic extraction.

In a third aspect, the present disclosure provides a battery, including a positive electrode, a negative electrode, and the separator. The separator is located between the positive electrode and the negative electrode.

In a fourth aspect, the present disclosure provides an electric device, including the foregoing battery.

In the separator provided in the present disclosure, the lithium-rich material particles are used as a filler in the porous polymer substrate. Compared with conventional inorganic particles, the lithium-rich material particles are not only able to improve separator resistance to high temperature, but also increase initial coulombic efficiency of the battery through lithium replenishment to the battery during formation, because the lithium-rich material particles can decompose and release lithium ions under high-voltage conditions. In addition, it is found through research that the dispersion degree range and particle coverage rate of the lithium-rich material particles in the porous polymer substrate can affect the tensile strength of the separator and the wetting capability of the electrolyte. When the lithium-rich material particles in the porous polymer substrate have the dispersion degree range ranging from 4 µm to 10 µm and the particle coverage rate ranging from 5% to 12%, the tensile strength of the separator can be effectively ensured, and the wetting capability of the electrolyte for the separator can be improved, avoiding dark spots on the negative electrode due to a poor diffusion effect of the electrolyte, and also effectively avoiding lithium dendrites due to uneven deposition of lithium ions.

### DETAILED DESCRIPTION

To make the technical problems to be resolved in the present disclosure, technical solutions, and beneficial effects more comprehensible, the following further describes the present disclosure in detail with reference to embodiments. It should be understood that the specific embodiments described herein are merely used to explain the present disclosure but are not intended to limit the present disclosure.

An embodiment of the present disclosure provides separator, including the following components:
a porous polymer substrate and lithium-rich material particles, and
the lithium-rich material particles are dispersed in the porous polymer substrate, and the lithium-rich material particles in the porous polymer substrate have a dispersion degree range ranging from 4 µm to 10 µm and a particle coverage rate ranging from 5% to 12%.

In the separator, the lithium-rich material particles are used as a filler in the porous polymer substrate. Compared with conventional inorganic particles, the lithium-rich material particles are not only able to improve separator resistance to high temperature, but also increase initial coulombic efficiency of the battery through lithium replenishment to the battery during formation, because the lithium-rich material particles can be decomposed and release lithium ions under high-voltage conditions. In addition, it is found through research that the dispersion degree range and particle coverage rate of the lithium-rich material particles in the porous polymer substrate can affect the tensile strength of the separator and the wetting capability of the electrolyte. When the lithium-rich material particles in the porous polymer substrate have the dispersion degree range ranging from 4 µm to 10 µm and the particle coverage rate ranging from 5% to 12%, the tensile strength of the separator can be effectively ensured, and the wetting capability of the electrolyte for the separator can be improved, avoiding dark spots on the negative electrode due to a poor diffusion effect of the electrolyte, and also effectively avoiding lithium dendrites due to uneven deposition of lithium ions.

In the description of the present disclosure, the term "dispersion degree range" reflects the dispersion state of the lithium-rich material particles in the polymer substrate. The dispersion degree range can be obtained by the following testing method:
A Scanning Electron Microscope (SEM) image of a surface of the separator is taken at 5000× magnification. A region of 0.5 cm × 0.5 cm in length and width is selected in the SEM image. A distance between adjacent lithium-rich material particles is measured in the region. A difference between a maximum value of the distance and a minimum value of the distance that are obtained through measurement is the dispersion degree range of the lithium-rich material particles in the porous polymer substrate.

In the description of the present disclosure, the term "particle coverage rate" reflects the coating state of lithium-rich material particles in the polymer substrate. The particle coverage rate can be obtained by the following testing method:
An SEM image of the surface of the separator is taken at 5000× magnification. A region of 0.5 cm × 0.5 cm in length and width is selected in the SEM image, and the lithium-rich material particles are stained by the software. A ratio of a stained area to a non-stained area is calculated to obtain the particle coverage rate.

In different embodiments, the dispersion degree range of the lithium-rich material particles in the porous polymer substrate may be 4 µm, 4.8 µm, 5.0 µm, 5.4 µm, 5.8 µm, 6.0 µm, 6.9 µm, 7.2 µm, 8.0 µm, 8.5 µm, 9.3 µm, 9.6 µm, or 10 µm. The particle coverage rate of the lithium-rich material particles in the porous polymer substrate may be 5%, 6%, 7%, 8%, 9%, 10%, 11%, or 12%.

In some embodiments, the lithium-rich material particles in the porous polymer substrate have the dispersion degree range ranging from 5 µm to 8.5 µm and the particle coverage rate ranging from 6% to 9%.

When the dispersion degree range and the particle coverage rate of the lithium-rich material particles in the porous polymer substrate are within the foregoing ranges, the tensile strength and ionic conductivity of the separator, and the wetting capability of the electrolyte for the separator are further improved.

In some embodiments, based on a total weight of the separator being 100%, a mass content of the porous polymer substrate ranges from 90% to 99%, and a mass content of the lithium-rich material particles ranges from 1% to 10%.

In some embodiments, based on a total weight of the separator being 100%, a mass content of the porous polymer substrate ranges from 93% to 99.5%, and a mass content of the lithium-rich material particles ranges from 0.5% to 7%.

The porous polymer substrate is a main substrate structure for maintaining morphology and toughness of the separator and is also a main structure for forming a porous structure. The porous structure provides permeability for the electrolyte, and the polymer material itself provides affinity and wetting capability for the electrolyte, ensuring the exchange of ions in the electrolyte at both sides of the separator. The lithium-rich material particles are used to improve resistance to high temperature of the separator and replenish lithium ions during formation of a battery. When the mass content of the porous polymer substrate and the mass content of the lithium-rich material particles are within the foregoing ranges, the separator can be ensured to have high tensile strength, good resistance to high temperature, and high initial coulombic efficiency of the battery.

In some embodiments, a melting point of the porous polymer substrate ranges from 80°C to 180°C.

When the melting point of the porous polymer substrate is within the foregoing range, the porous polymer substrate has good heat resistance and flexibility.

In some embodiments, a melting point of the porous polymer substrate ranges from 100°C to 170°C.

In some embodiments, the porous polymer substrate comprises one or more of high-density polyethylene, ultra-high-density polyethylene, low-density polyethylene, linear low-density polyethylene, high-density polypropylene, ultra-high-density polypropylene, polyimide, and polyvinylidene fluoride. The high-density polyethylene has a density ranging from 0.94 g/m³ to 0.95 g/m³; the ultra-high-density polyethylene has a density greater than 0.96 g/m³; the low-density polyethylene has a density about 0.91 g/m³; the high-density polypropylene has a density ranging from 0.89 g/m³ to 0.91 g/m³; and the ultra-high-density polypropylene has a density greater than 0.91 g/m³.

In some embodiments, the lithium-rich material particles comprise one or more of Li₅FeO₄, Li₂Ni₅O₄, Li₂MnO₃, LiCoO₄, Li₆MnO₄, and LiReOe.

By selecting one or more of Li₅FeO₄, Li₂Ni₅O₄, Li₂MnO₃, LiCoO₄, Li₆MnO₄, and LiReO₆ as the lithium-rich material particles, there are advantages of high lithium content and decomposition and release of lithium ions at high voltages (3.5-4.1 V), which helps increase initial coulombic efficiency in battery formation.

In some embodiments, a particle size (D50) of the lithium-rich material particles ranges from 0.5 µm to 5 µm.

In different embodiments, the particle size (D50) of the lithium-rich material particles may be 0.5 µm, 0.8 µm, 1 µm, 1.2 µm, 1.5 µm, 1.8 µm, 2 µm, 2.2 µm, 2.5 µm, 2.8 µm, 3 µm, 3.2 µm, 3.5 µm, 3.8 µm, 4 µm, or 5 µm.

In some embodiments, a particle size (D50) of the lithium-rich material particles ranges from 0.5 µm to 2 µm.

The particle size (D50) of the lithium-rich material particles is related to the dispersion degree of the lithium-rich material particles in the porous polymer substrate. When the particle size (D50) of the lithium-rich material particles is within the foregoing range, the lithium-rich material particles have a larger particle size (D50) than a conventional inorganic filler, which can effectively avoid particle aggregation caused by van der Waals forces or electrostatic forces, improving uniformity of the dispersion of the lithium-rich material particles in the porous polymer substrate, and improving consistency of performance in regions of the separator.

Particle size (D50) refers to a median particle size of the lithium-rich material particles, also known as the volume average particle size, indicating the corresponding particle size when the cumulative volume distribution percentage of the material reaches 50%. The particle size D50 of the Li-rich material can be measured by a laser strength tester.

The tensile strength of the separator is affected by the porous polymer substrate and is also affected by the dispersion degree range and particle coverage rate of the added lithium-rich material particles. When the dispersion degree range of the lithium-rich material particles is controlled to range from 4 µm to 10 µm, and the particle coverage rate is controlled to range from 5% to 12%, the tensile strength of the separator can be ensured to be at a high level.

In some embodiments, the separator meets at least one of the following conditions:
a tensile strength of the separator ranges from 150 MPa to 300 MPa;
a pore size of the separator ranges from 20 nm to 70 nm;
porosity of the separator ranges from 20% to 70%;
air permeability of the separator ranges from 50 s/100 cc to 500 s/100 cc;
an electrolyte diffusion radius of the separator ranges from 0.2 cm to 3 cm.

In some embodiments, a tensile strength of the separator ranges from 150 MPa to 300 MPa.

In some embodiments, a pore size of the separator ranges from 20 nm to 70 nm, and porosity of the separator ranges from 20% to 70%.

The pore size and the porosity of the separator affect electrolyte permeability of the separator, and also affect a barrier effect of the separator for the positive and negative electrodes. When the pore size and the porosity of the separator are within the foregoing ranges, a short circuit between the positive and negative electrodes is prevented, reducing a self-discharge rate; and the electrolyte permeability is good, improving ionic conductivity.

In some embodiments, porosity of the separator ranges from 40% to 60%.

In some embodiments, air permeability of the separator ranges from 50 s/100 cc to 500 s/100 cc.

In some embodiments, air permeability of the separator ranges from 50 s/100 cc to 200 s/100 cc.

The air permeability of the separator is affected to a certain extent by the porosity of the separator. When the air permeability of the separator is within the foregoing range, permeation efficiency of lithium ions can be increased.

In some embodiments, a thickness of the separator ranges from 1 µm to 50 µm.

In some embodiments, an electrolyte diffusion radius of the separator ranges from 0.2 cm to 3 cm.

The electrolyte diffusion radius of the separator indicates permeation and wetting effects of the electrolyte on the separator.

In the description of the present disclosure, the term "electrolyte diffusion radius of the separator" can be obtained by the following testing method:

The separator is placed in a circular hollow fixture with a radius of 3 cm to make the separator suspended. 30 µL of electrolyte is drawn by using a pipette and added dropwise to the center of the separator. After 30s, the electrolyte diffusion radius is measured.

In some embodiments, a thickness of the separator ranges from 2 µm to 20 µm.

When the thickness of the separator is within the foregoing range, the positive electrode can be effectively isolated from the negative electrode while ion permeability can be ensured, and specific puncture-resistant mechanical strength is provided.

Another embodiment of the present disclosure provides a method for preparing the separator, including the steps of:
The lithium-rich material particles are pre-dispersed in paraffin oil to form a suspension;
the suspension is mixed with a polymer material to prepare a precursor of the separator; and
the paraffin oil is removed from the precursor of the separator to obtain the separator. The separator comprises the porous polymer substrate and the lithium-rich material particles dispersed in the porous polymer substrate.

Compared with existing separator preparation methods, a material treatment sequence before extrusion is changed in the present disclosure. Specifically, different from an existing inorganic filler blending method, in this preparation method, the lithium-rich material particles are first dispersed in the paraffin oil to form the suspension, and then the suspension and the polymer material are mixed and extruded to obtain the precursor of the separator. The paraffin oil provides a pore-forming effect. During blending, the paraffin oil and the polymer material are fully mixed. After the subsequent operation of removing the paraffin oil, pores are formed in the polymer material through the removal of the paraffin oil, to obtain the porous polymer substrate. Premixing the lithium-rich material particles and the paraffin oil to form the suspension is also an importance operation to reduce the dispersion degree range of the lithium-rich material particles in the porous polymer substrate and increase the particle coverage rate. The dispersion in the paraffin oil can reduce the aggregation of the lithium-rich material particles, thereby improving the dispersion of the lithium-rich material particles in the porous polymer substrate. In this case, the prepared separator has high uniformity of the lithium-rich material particles, which helps increase the tensile strength and ion-conducting capability of the separator. More importantly, as the lithium-rich material particles are dispersed in the paraffin oil, during the removal of the paraffin oil and the formation of pores, the surface of the lithium-rich material particles can be fully exposed on the inner of the pores, which avoids the coverage on the lithium-rich material particles by the polymer material, and give full play to the function of lithium replenishment through decomposition of the lithium-rich material particles, increasing the particle coverage rate of the separator without increasing the addition amount of the lithium-rich material particles.

In some embodiments, a mass ratio of the polymer material to the paraffin oil is (25-35):(65-75).

The mass ratio of the polymer material to the paraffin oil is controlled to be within the foregoing range, which helps control the pore size and porosity of the separator, ensuring the ion-conducting capability of the separator.

In some embodiments, the manner of dispersing the lithium-rich material particles in the paraffin oil comprises one or more of stirring, ultrasonic treatment, and mechanical grinding.

In some embodiments, the precursor of the separator is prepared through extrusion.

In some embodiments, the paraffin oil is removed through organic extraction.

Specifically, the precursor of the separator is placed in an organic solvent, the paraffin oil is dissolved in the organic solvent to be removed from the precursor of the separator, and then the precursor of the separator with the paraffin oil removed is dried to obtain the separator.

In some embodiments, the precursor of the separator is stretched after the extrusion operation, to obtain the precursor of the separator with a desired thickness.

Another embodiment of the present disclosure provides a battery, including a positive electrode, a negative electrode, and the separator. The separator is located between the positive electrode and the negative electrode.

By using the separator, as the separator has high tensile strength, the resistance to lithium dendrite growth of the obtained battery can be significantly improved, avoiding a short circuit due to the separator being punctured by lithium dendrites, and the irreversible capacity loss in battery formation can be reduced, increasing initial coulombic efficiency of the battery.

Another embodiment of the present disclosure provides an electric device, including the battery.

As the battery provided in the embodiment of the present disclosure is thus having high market competitiveness.

In some embodiments of the present disclosure, the electric device comprises, but is not limited to, 3C-type electronic devices, and electric vehicles including, but is not limited to, new energy vehicles, and force-helping bicycles, etc.

The following further describes the present disclosure through examples.

### Example 1

This example describes the separator and the preparation method thereof, and the battery that were disclosed in the present disclosure, including the following operation steps:
The polymer material was polyvinylidene fluoride with a melting point of 155°C in a mass proportion of 98%.

The lithium-rich material particles were Li₅FeO₄ with a particle size (D50) of 1.5 µm in a mass proportion of 2%.

The lithium-rich material particles were first dispersed in a paraffin oil system by stirring to obtain a suspension. A mass ratio of the paraffin oil to the polymer material was 70:30. Then, the suspension and the polymer material were mixed, and were then co-extruded and stretched to obtain a precursor of the separator. The paraffin oil was removed from the precursor of the separator through organic extraction, to obtain the separator.

The dispersion degree range was obtained by the following testing: An SEM image of the surface of the separator was taken at 5000× magnification. A region of 0.5 cm × 0.5 cm in length and width was selected in the SEM image. A distance between adjacent lithium-rich material particles was measured in the region. A difference between a maximum value of the distance and a minimum value of the distance that were obtained through measurement was a dispersion degree range of the lithium-rich material particles in the porous polymer substrate, which was 6.5 µm.

The particle coverage rate was obtained by the following testing: An SEM image of the surface of the separator was taken at 5000× magnification. A region of 0.5 cm × 0.5 cm in length and width was selected in the SEM image, and the lithium-rich material particles were stained by the software. A ratio of a stained area to a non-stained area was calculated to obtain a particle coverage rate, which was 8.8%.

Permeability of the separator was obtained by the following testing: the separator greater than 10 cm in length, was used for permeability test by using permeability tester (brand: SYSTESTER, model: GTR) .

Porosity of the separator was obtained by the following testing: the separator with 0.5 cm × 0.5 cm in length and width was selected. The porosity of the separator was obtained according to a formula: P=(1-m/(L × b × d × p₀)) × 100%. Where, P was the porosity of the separator. m was the mass of the separator, the unit was g. L was a length of the separator, the unit was cm. b was the width of the separator, the unit was cm. d was the thickness of the separator, the unit was µm. p₀ was the density of the diaphragm, the unit was g/cm³. Both L and b was 10 cm.

Aperture of the separator was obtained by the following testing: the separator was observed under a microscope and the average value of 100 apertures was calculated.

The separator has porosity of 45%, a pore size of 50 nm, air permeability of 95 s/100 cc, and a thickness of 7 µm.

### Example 2

This example describes the separator and the preparation method thereof, and the battery that were disclosed in the present disclosure, including the following operation steps:

The polymer material was ultra-high-density polyethylene with a melting point of 135°C in a mass proportion of 99%.

The lithium-rich material particles were LiCoO₄ with a particle size (D50) of 1.2 µm in a mass proportion of 1%.

The lithium-rich material particles were first dispersed in a paraffin oil system by stirring to obtain a suspension. A mass ratio of the paraffin oil to the polymer material was 70:30. Then, the suspension and the polymer material were mixed, and were then co-extruded and stretched to obtain a precursor of the separator. The paraffin oil was removed from the precursor of the separator through organic extraction, to obtain the separator.

An SEM image of the surface of the separator was taken at 5000× magnification. A region of 0.5 cm × 0.5 cm in length and width was selected in the SEM image. A distance between adjacent lithium-rich material particles was measured in the region. A difference between a maximum value and a minimum value that were obtained through measurement was a dispersion degree range of the lithium-rich material particles in the porous polymer substrate, which was 7.2 µm.

An SEM image of the surface of the separator was taken at 5000× magnification. A region of 0.5 cm × 0.5 cm in length and width was selected in the SEM image, and the lithium-rich material particles were stained by the software. A ratio of a stained area to a non-stained area was calculated to obtain a particle coverage rate, which was 7.1%.

The separator has porosity of 50%, a pore size of 54 nm, air permeability of 100 s/100 cc, and a thickness of 9 µm.

### Example 3

This example describes the separator and the preparation method thereof, and the battery that were disclosed in the present disclosure, including the following operation steps:
The polymer material was ultra-high-density polyethylene with a melting point of 135°C in a mass proportion of 99.3%.

The lithium-rich material particles were LiCoO₄ with a particle size (D50) of 1.8 µm in a mass proportion of 0.7%.

The lithium-rich material particles were first dispersed in a paraffin oil system by stirring to obtain a suspension. A mass ratio of the paraffin oil to the polymer material was 70:30. Then, the suspension and the polymer material were mixed, and were then co-extruded and stretched to obtain a precursor of the separator. The paraffin oil was removed from the precursor of the separator through organic extraction, to obtain the separator.

An SEM image of the surface of the separator was taken at 5000× magnification. A region of 0.5 cm × 0.5 cm in length and width was selected in the SEM image. A distance between adjacent lithium-rich material particles was measured in the region. A difference between a maximum value and a minimum value that were obtained through measurement was a dispersion degree range of the lithium-rich material particles in the porous polymer substrate, which was 8.1 µm.

An SEM image of the surface of the separator was taken at 5000× magnification. A region of 0.5 cm × 0.5 cm in length and width was selected in the SEM image, and the lithium-rich material particles were stained by the software. A ratio of a stained area to a non-stained area was calculated to obtain a particle coverage rate, which was 6.5%.

The separator has porosity of 50%, a pore size of 53 nm, air permeability of 110 s/100 cc, and a thickness of 9 µm.

### Example 4

This example describes the separator and the preparation method thereof, and the battery that were disclosed in the present disclosure, including the following operation steps:
The polymer material was high-density polypropylene with a melting point of 165°C in a mass proportion of 99.5%.

The lithium-rich material particles were Li₅FeO₄ with a particle size (D50) of 1.5 µm in a mass proportion of 0.5%.

The lithium-rich material particles were first dispersed in a paraffin oil system by stirring to obtain a suspension. A mass ratio of the paraffin oil to the polymer material was 70:30. Then, the suspension and the polymer material were mixed, and were then co-extruded and stretched to obtain a precursor of the separator. The paraffin oil was removed from the precursor of the separator through organic extraction, to obtain the separator.

An SEM image of the surface of the separator was taken at 5000× magnification. A region of 0.5 cm × 0.5 cm in length and width was selected in the SEM image. A distance between adjacent lithium-rich material particles was measured in the region. A difference between a maximum value and a minimum value that were obtained through measurement was a dispersion degree range of the lithium-rich material particles in the porous polymer substrate, which was 9.8 µm.

An SEM image of the surface of the separator was taken at 5000× magnification. A region of 0.5 cm × 0.5 cm in length and width was selected in the SEM image, and the lithium-rich material particles were stained by the software. A ratio of a stained area to a non-stained area was calculated to obtain a particle coverage rate, which was 5.2%.

The separator has porosity of 40%, a pore size of 50 nm, air permeability of 120 s/100 cc, and a thickness of 10 µm.

### Example 5

This example describes the separator and the preparation method thereof, and the battery that were disclosed in the present disclosure, including the following operation steps:
The polymer material was polyvinylidene fluoride with a melting point of 155°C in a mass proportion of 96.5%.

The lithium-rich material particles were Li₅FeO₄ with a particle size (D50) of 1.2 µm in a mass proportion of 3.5%.

The lithium-rich material particles were first dispersed in a paraffin oil system by stirring to obtain a suspension. A mass ratio of the paraffin oil to the polymer material was 70:30. Then, the suspension and the polymer material were mixed, and were then co-extruded and stretched to obtain a precursor of the separator. The paraffin oil was removed from the precursor of the separator through organic extraction, to obtain the separator.

An SEM image of the surface of the separator was taken at 5000× magnification. A region of 0.5 cm × 0.5 cm in length and width was selected in the SEM image. A distance between adjacent lithium-rich material particles was measured in the region. A difference between a maximum value and a minimum value that were obtained through measurement was a dispersion degree range of the lithium-rich material particles in the porous polymer substrate, which was 5.2 µm.

An SEM image of the surface of the separator was taken at 5000× magnification. A region of 0.5 cm × 0.5 cm in length and width was selected in the SEM image, and the lithium-rich material particles were stained by the software. A ratio of a stained area to a non-stained area was calculated to obtain a particle coverage rate, which was 11.8%.

The separator has porosity of 48%, a pore size of 50 nm, air permeability of 88 s/100 cc, and a thickness of 7 µm.

### Example 6

This example describes the separator and the preparation method thereof, and the battery that were disclosed in the present disclosure, including the following operation steps:
The polymer material was polyvinylidene fluoride with a melting point of 155°C in a mass proportion of 95.5%.

The lithium-rich material particles were Li₅FeO₄ with a particle size (D50) of 1.2 µm in a mass proportion of 4.5%.

The lithium-rich material particles were first dispersed in a paraffin oil system by stirring to obtain a suspension. A mass ratio of the paraffin oil to the polymer material was 70:30. Then, the suspension and the polymer material were mixed, and were then co-extruded and stretched to obtain a precursor of the separator. The paraffin oil was removed from the precursor of the separator through organic extraction, to obtain the separator.

An SEM image of the surface of the separator was taken at 5000× magnification. A region of 0.5 cm × 0.5 cm in length and width was selected in the SEM image. A distance between adjacent lithium-rich material particles was measured in the region. A difference between a maximum value and a minimum value that were obtained through measurement was a dispersion degree range of the lithium-rich material particles in the porous polymer substrate, which was 4 µm.

An SEM image of the surface of the separator was taken at 5000× magnification. A region of 0.5 cm × 0.5 cm in length and width was selected in the SEM image, and the lithium-rich material particles were stained by the software. A ratio of a stained area to a non-stained area was calculated to obtain a particle coverage rate, which was 12.0%.

The separator has porosity of 49%, a pore size of 49 nm, air permeability of 89 s/100 cc, and a thickness of 7 µm.

### Comparative Example 1

This comparative example comparatively describes the separator and the preparation method thereof, and the battery that were disclosed in the present disclosure, including the following operation steps:
The polymer material is ultra-high-density polyethylene with a melting point of 135°C in a mass proportion of 99.8%.

The lithium-rich material particles were LiCoO₄ with a particle size (D50) of 1.2 µm in a mass proportion of 0.2%.

The lithium-rich material particles, paraffin oil, and the polymer material were blended directly, and were then co-extruded and stretched to obtain a precursor of the separator. A mass ratio of the paraffin oil to the polymer material was 70:30. The paraffin oil was removed from the precursor of the separator through organic extraction, to obtain the separator.

An SEM image of the surface of the separator was taken at 5000× magnification. A region of 0.5 cm × 0.5 cm in length and width was selected in the SEM image. A distance between adjacent lithium-rich material particles was measured in the region. A difference between a maximum value and a minimum value that were obtained through measurement was a dispersion degree range of the lithium-rich material particles in the porous polymer substrate, which was 11.2 µm.

An SEM image of the surface of the separator was taken at 5000× magnification. A region of 0.5 cm × 0.5 cm in length and width was selected in the SEM image, and the lithium-rich material particles were stained by the software. A ratio of a stained area to a non-stained area was calculated to obtain a particle coverage rate, which was 4.8%.

The separator has porosity of 38%, a pore size of 45 nm, air permeability of 150 s/100 cc, and a thickness of 9 µm.

### Comparative Example 2

This comparative example comparatively describes the separator and the preparation method thereof, and the battery that are disclosed in the present disclosure, including the following operation steps:
The polymer material was ultra-high-density polyethylene with a melting point of 135°C in a mass proportion of 92%.

The lithium-rich material particles were LiCoO₄ with a particle size (D50) of 1.2 µm in a mass proportion of 8%.

The lithium-rich material particles, paraffin oil, and the polymer material were blended directly, and were then co-extruded and stretched to obtain a precursor of the separator. A mass ratio of the paraffin oil to the polymer material was 70:30. The paraffin oil was removed from the precursor of the separator through organic extraction, to obtain the separator.

An SEM image of the surface of the separator was taken at 5000× magnification. A region of 0.5 cm × 0.5 cm in length and width was selected in the SEM image. A distance between adjacent lithium-rich material particles was measured in the region. A difference between a maximum value and a minimum value that were obtained through measurement was a dispersion degree range of the lithium-rich material particles in the porous polymer substrate, which was 3.2 µm.

An SEM image of the surface of the separator was taken at 5000× magnification.

A region of 0.5 cm × 0.5 cm in length and width was selected in the SEM image, and the lithium-rich material particles were stained by the software. A ratio of a stained area to a non-stained area was calculated to obtain a particle coverage rate, which was 12.5%.

The separator has porosity of 55%, a pore size of 50 nm, air permeability of 65 s/100 cc, and a thickness of 7 µm.

### Comparative Example 3

The difference from Example 1 lies in that this example describes the separator and the preparation method thereof, and the battery that were disclosed in the present disclosure, including the following operation steps:
The polymer material is polyvinylidene fluoride with a melting point of 155°C in a mass proportion of 98%.

Conventional aluminum oxide has a particle size (D50) of 1.5 µm and a mass proportion of 2%.

The aluminum oxide particles were first dispersed in a paraffin oil system by stirring to obtain a suspension. A mass ratio of the paraffin oil to the polymer material was 70:30. Then, the suspension and the polymer material were mixed, and were then co-extruded and stretched to obtain a precursor of the separator. The paraffin oil was removed from the precursor of the separator through organic extraction, to obtain the separator.

An SEM image of the surface of the separator was taken at 5000× magnification. A region of 0.5 cm × 0.5 cm in length and width was selected in the SEM image. A distance between adjacent aluminum oxide particles was measured in the region. A difference between a maximum value and a minimum value that were obtained through measurement was a dispersion degree range of the aluminum oxide particles in the porous polymer substrate, which was 6.5 µm.

An SEM image of the surface of the separator was taken at 5000× magnification. A region of 0.5 cm × 0.5 cm in length and width was selected in the SEM image, and the aluminum oxide particles were stained by the software. A ratio of a stained area to a non-stained area was calculated to obtain a particle coverage rate, which was 8.0%.

The separator has porosity of 45%, a pore size of 50 nm, air permeability of 95 s/100 cc, and a thickness of 7 µm.

### Performance tests

The prepared separator was subjected to the following performance tests:
1. Electrolyte diffusion radius test: The separator was placed in a circular hollow fixture with a radius of 3 cm to make the separator suspended and separated from the tabletop. 30 µL of electrolyte was drawn by using a pipette and added dropwise to the center of the separator. After 30s, the electrolyte diffusion radius was measured. The composition of the electrolyte was DMC:EMC:DEC:EC = 1:3:1:4 plus 1 mol/L LiPF₆.
2. Battery initial coulombic efficiency test: The separator, the positive electrode, the negative electrode, and the electrolyte were assembled to obtain a battery. The battery was charged at 0.2C constant current and constant voltage to 3.75 V, with a cutoff current of 0.05C, and then left to stand for 5 min. A charge capacity C1 was recorded. The battery was discharged at 0.5C constant current to 2 V, and then left to stand for 5 min. A discharge capacity C2 was recorded. Initial coulombic efficiency = C2/C1×100%. Positive electrode: PVDF was dissolved in a specific amount of NMP, and then lithium iron phosphate and a conductive agent were added to obtain a mixture. The mixture was applied to an electrode plate through coating. Negative electrode: SBR, a graphite material, and a conductive agent were added to water to obtain a mixture. The mixture was applied to an electrode plate through coating.
3. Battery capacity retention rate test: The separator, the positive electrode, the negative electrode, and the electrolyte were assembled to obtain a battery. After formation, the battery was charged and discharged at 1C/1C for 500 cycles. 500 cycles capacity retention rate = 500 cycles capacity/first-cycle capacity×100%. After 500 cycles of charging and discharging, the battery was disassembled, the negative electrode was taken out and observed, and observation results were recorded.
4. Tensile strength test: For the tensile strength test, refer to the Chinese national standard GB/T36363-2018.

The obtained test results are shown in Table 1.

**Table 1**

| | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Electrolyte diffusion radius (cm) | 1.54 | 1.52 | 1.40 | 1.33 | 1.42 | 1.58 | 0.83 | 1.44 | 1.42 |
| Battery initial coulombic efficiency (%) | 88.4 | 87.5 | 87.2 | 85.9 | 88.0 | 88.5 | 84.7 | 88.4 | 82.8 |
| 500 cycles capacity retention rate (%) and interface | 92.4/Golden yellow interface without lithium precipitation and dark spots | 91.5/Golden yellow interface without lithium precipitation and dark spots | 90.2/Golden yellow interface without lithium precipitation and dark spots | 88.2/Golden yellow interface without lithium precipitation and with small dark spots at edges | 87.5/Slight gas evolution in the battery (the gas can be discharged in time during battery formation) | 86.0/Slight gas evolution in the battery (the gas can be discharged in time during battery formation) | 85.8/Lithium precipitation and dark spots in the battery | 84.3/Gas evolution in the battery, where the gas cannot be discharged, resulting in point-like dark spots on the interface | 89.5/Slight dark spots at edges of the interface |
| Separator tensile strength (MPa) | 250 | 255 | 265 | 275 | 195 | 185 | 250 | 143 | 210 |

It can be learned from the test results in Table 1 that, when the dispersion degree range of the lithium-rich material particles in the porous polymer substrate was controlled to range from 4 µm to 10 µm, and the particle coverage rate was controlled to range from 5% to 12%, the tensile strength of the separator can be effectively increased while the electrolyte wetting capability and the battery initial coulombic efficiency are ensured, and the capacity retention rate of the battery in long-term cycles can be effectively increased, and lithium dendrites and dark spots on the negative electrode are inhibited, thereby improving the safety performance and cycle life of the battery.

The descriptions are merely exemplary embodiments of the present disclosure, but are not intended to limit the present disclosure. Any modification, equivalent replacement, or improvement made within the spirit and principle of the present disclosure shall fall within the protection scope of the present disclosure.

## Claims

1. A separator, comprising the following components:
a porous polymer substrate and lithium-rich material particles,
the lithium-rich material particles being dispersed in the porous polymer substrate, and the lithium-rich material particles in the porous polymer substrate having a dispersion degree range ranging from 4 µm to 10 µm, and a particle coverage rate ranging from 5% to 12%.

2. The separator according to claim 1, wherein the lithium-rich material particles in the porous polymer substrate have the dispersion degree range ranging from 5 µm to 8.5 µm, and the particle coverage rate ranging from 6% to 9%.

3. The separator according to claim 1 or 2, wherein based on a total weight of the separator being 100%, a mass content of the porous polymer substrate ranges from 93% to 99.5%, and a mass content of the lithium-rich material particles ranges from 0.5% to 7%.

4. The separator according to claim 1 or 2, wherein based on a total weight of the separator being 100%, a mass content of the porous polymer substrate ranges from 90% to 99%, and a mass content of the lithium-rich material particles ranges from 1% to 10%.

5. The separator according to any one of claims 1 to 4, wherein a melting point of the porous polymer substrate ranges from 80°C to 180°C.

6. The separator according to any one of claims 1 to 5, wherein the porous polymer substrate comprises one or more of high-density polyethylene, ultra-high-density polyethylene, low-density polyethylene, linear low-density polyethylene, high-density polypropylene, ultra-high-density polypropylene, polyimide, and polyvinylidene fluoride.

7. The separator according to any one of claims 1 to 6, wherein the lithium-rich material particles comprise one or more of Li₅FeO₄, Li₂Ni₅O₄, Li₂MnO₃, LiCoO₄, Li₆MnO₄, and LiReOe.

8. The separator according to any one of claims 1 to 7, wherein a particle size D50 of the lithium-rich material particles ranges from 0.5 µm to 5 µm.

9. The separator according to any one of claims 1 to 8, wherein the separator meets at least one of the following conditions:
a tensile strength of the separator ranges from 150 MPa to 300 MPa;
a pore size of the separator ranges from 20 nm to 70 nm;
porosity of the separator ranges from 20% to 70%;
air permeability of the separator ranges from 50 s/100 cc to 500 s/100 cc;
an electrolyte diffusion radius of the separator ranges from 0.2 cm to 3 cm.

10. The separator according to any one of claims 1 to 9, wherein a thickness of the separator ranges from 1 µm to 50 µm.

11. A method for preparing the separator according to any one of claims 1 to 10, comprising the steps of:
dispersing the lithium-rich material particles in paraffin oil to form a suspension;
mixing the suspension with a polymer material to prepare a precursor of the separator; and
removing the paraffin oil from the precursor of the separator to obtain the separator.

12. The method for preparing the separator according to claim 11, wherein a mass ratio of the polymer material to the paraffin oil is (25-35):(65-75).

13. The method for preparing the separator according to claim 11 or 12, wherein the paraffin oil is removed through organic extraction.

14. A battery, comprising a positive electrode, a negative electrode, and the separator according to any one of claims 1 to 10, the separator being located between the positive electrode and the negative electrode.

15. An electric device, comprising the battery according to claim 14.
